# EUROPEAN PATENT SPECIFICATION

(11) **EP 1 949 228 B1**
(45) Date of publication and mention of the grant of the patent: **21.07.2010**
(21) Application number: 06826257.5
(22) Date of filing: 18.10.2006
(51) Int. Cl.: G06F 9/45

(54) **ASYNCHRONOUS JUST-IN-TIME COMPILATION**
ASYNCHRONE JUST-IN-TIME-COMPILIERUNG
COMPILATION A LA VOLEE ASYNCHRONE

(30) Priority: 14.11.2005 US 274693
(43) Date of publication of application: 30.07.2008
(73) Proprietor: Microsoft Corporation, Redmond, WA 98052-6399 (US)
(72) Inventor: TAN, Victor, Redmond, Washington 98052-6399 (US)
(74) Representative: Grünecker, Kinkeldey, Stockmair & Schwanhäusser Anwaltssozietät
(86) International application number: PCT/US2006/040838
(87) International publication number: WO 2007/055883

(56) References cited:
- WO-A1-2004/107170
- JP-A- 2005 284 729
- US-A1- 2001 042 241
- US-A1- 2002 104 076
- US-A1- 2004 168 162
- PLEZBERT M P ET AL: "DOES JUST IN TIME = BETTER LATE THAN NEVER?" CONFERENCE RECORD OF POPL '97: 24TH. ACM SIGPLAN-SIGACT SYMPOSIUM ON PRINCIPLES OF PROGRAMMING LANGUAGE. PARIS, JAN. 15 - 17, 1997; [CONFERENCE RECORD OF POPL: ACM SIGPLAN-SIGACT SYMPOSIUM ON PRINCIPLES OF PROGRAMMING LANGUAGE], NEW YORK, ACM, US, vol. CONF. 28, 15 January 1997 (1997-01-15), pages 120-131, XP000741815 ISBN: 978-0-89791-853-4
- ARNOLD M ET AL: "A Survey of Adaptive Optimization in Virtual Machines" PROCEEDINGS OF THE IEEE, IEEE. NEW YORK, US, vol. 93, no. 2, 1 February 2005 (2005-02-01), pages 449-466, XP011125807 ISSN: 0018-9219
- BRUENING D ET AL: "An infrastructure for adaptive dynamic optimization" CODE GENERATION AND OPTIMIZATION, 2003. CGO 2003. INTERNATIONAL SYMPOS IUM ON 23-26 MAR 2003, PISCATAWAY, NJ, USA,IEEE, 23 March 2003 (2003-03-23), pages 265-275, XP010638087 ISBN: 978-0-7695-1913-5

## Description

In typical emulators/just-in-time (JTT) compilers the code execution and synchronous code translation threads are typically located on the same processor or processor core. As the user navigates through the program, the code execution thread will attempt to find the requested functions in the translated code cache. When those functions are present, the thread will execute them at full speed and the user will perceive little or no delay. However, when those functions are absent, the code execution thread will make a blocking request to the synchronous code translation thread and wait until that thread reports that the function has been translated. In these cases, the user will perceive the brief "jitter" in program execution that has come to typify emulation / JIT compilation. This is especially problematic in programs where users demand smooth and realistic operations and visual effects such as those desired by players of computer games.

In this regard, there is a need for an emulator/JIT compiler that provides for smooth and immediate execution of program modules. US2002/0104076 A1 discloses a method, system and apparatus for generating and optimizing native code in a runtime compiler from a group of bytecodes presented to a compiler. The compiler accesses information that indicates a likelihood that a class will be a particular type when accessed by the running program. A code generator generates optimized native code according to the selected code generation method and stores the optimized native code in a code cache for reuse. A virtual machine in accordance with the disclosed method, system and apparatus may include a conventional bytecode interpreter that operates in parallel with the dynamic compiler.
It is the object of the present invention to provide an improved method for translating computer programs for immediate execution of program modules and a corresponding system.
This object is solved by the subject matter of the independent claims.
Preferred embodiments are defined by the dependent claims.

This summary is provided to introduce a selection of concepts in a simplified form that are further described below in the Detailed Description. This summary is not intended to identify key features or essential features of the claimed subject matter, nor is it intended to be used as an aid in determining the scope of the claimed subject matter.

In consideration of the above-identified shortcoming of the art, asynchronous JIT compilation is provided. For several embodiments, the asynchronous JIT compilation is carried out in part by detecting at least one computer program code module that may be required for future execution of a computer program and then translating for execution the detected program code module while executing at least one other previously translated program code module of the computer program. This may be done, for example by invoking an asynchronous code translation thread by a synchronous code translation thread in order to run ahead of user execution of a computer program and pre-translate program code detected for said pre-translation. The asynchronous thread is free to continue translating and then storing in code cache the discovered secondary functions in anticipation of future user needs. This collaboration increases the odds that the next function requested by the user will already have been translated. In an ideal environment, this approach permits the entire program to be translated well before the user exercises its more complex features, thereby reducing perceived "jitter" and increasing average performance.

Other advantages and features of the invention are described below.

### BRIEF DESCRIPTION OF THE DRAWINGS

A blocking local sense barrier is further described with reference to the accompanying drawings in which:

**Figure 1** is a time chart illustrating an exemplary implementation of a process according to synchronous just-in-time (JIT) compilation with one processor;

**Figure 2** is a time chart illustrating an exemplary implementation of a process according to asynchronous just-in-time (JIT) compilation with two processors;

**Figure 3** is a flow chart illustrating an exemplary implementation of a process according to asynchronous just-in-time (JIT) compilation;

**Figure 4** is a block diagram representing an exemplary computing device suitable for use in conjunction with implementing the just-in-time compilation processes of Figs. 1 through 3; and

**Figure 5** illustrates an exemplary networked computing environment in which many computerized processes may be implemented to perform the just-in-time compilation processes of Figs. 1 through 3.

### DETAILED DESCRIPTION

Certain specific details are set forth in the following description and figures to provide a thorough understanding of various embodiments of the invention. Certain well-known details often associated with computing and software technology are not set forth in the following disclosure to avoid unnecessarily obscuring the various embodiments of the invention. Further, those of ordinary skill in the relevant art will understand that they can practice other embodiments of the invention without one or more of the details described below. Finally, while various methods are described with reference to steps and sequences in the following disclosure, the description as such is for providing a clear implementation of embodiments of the invention, and the steps and sequences of steps should not be taken as required to practice this invention.

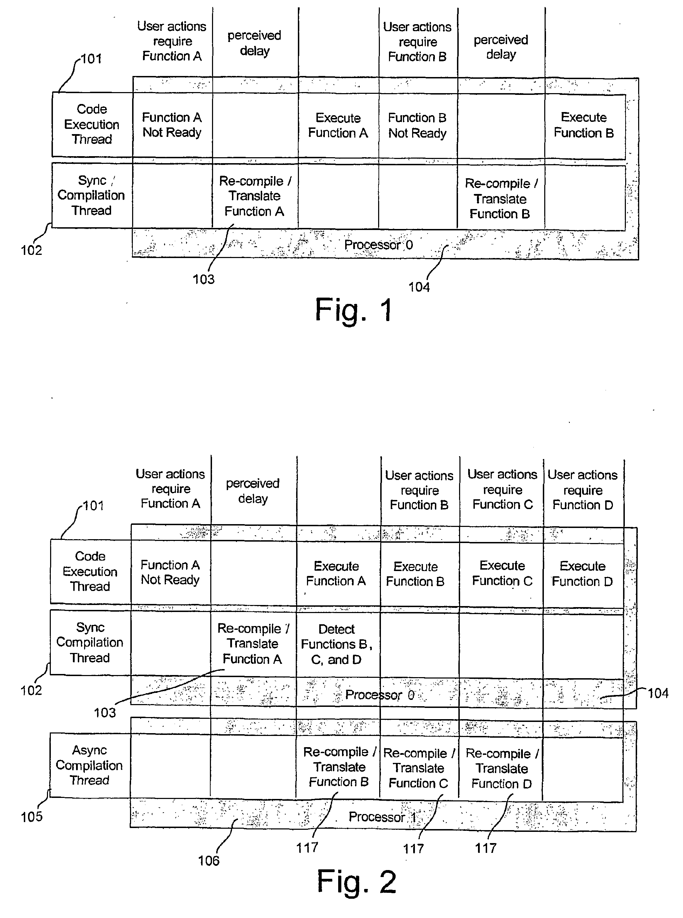

Referring to Figs. 1 and 2, shown are time charts illustrating an exemplary implementation of a process according to synchronous just-in-time (JIT) compilation with one processor (Fig. 1), and an asynchronous just-in-time compilation utilizing two processors (Fig. 2). As shown, an example of components of a system utilizing asynchronous just-in-time compilation with two processors comprise the following:
1. A code execution thread 101 that responds to user inputs and executes translated code on the user's behalf.
2. A synchronous code translation thread 102 that can be invoked by the code execution thread 101 in the event that the code translation thread 101 requires a function to be translated for the first time 103. In degenerate cases, the code execution thread 101 and the synchronous thread 102 run on the same processor or processor core 104.
3. An asynchronous code translation thread 105 that can be invoked by the synchronous thread 102 or that can self-invoke in order to run ahead of user execution and pre-translate code 117.
4. A translated code cache (not shown) with contention-management structures where both the synchronous 102 and asynchronous 105 threads deposit translated code for delivery to the code execution thread 101 with the introduction of a second, asynchronous code translation thread 105 running on another processor or processor core 106.

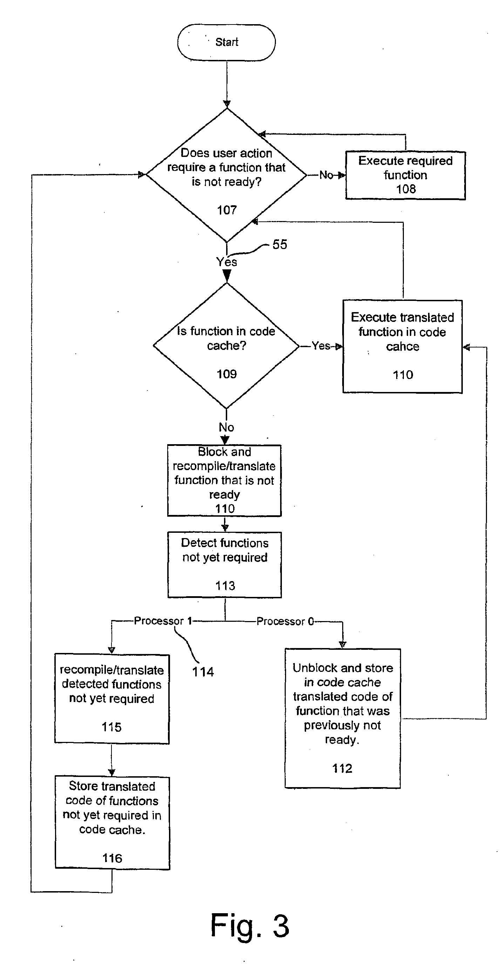

Referring next additionally to Fig. 3, shown is a flow chart illustrating an exemplary implementation of a process according to asynchronous just-in-time (JIT) compilation. As the user navigates through the program, it is determined whether the user action requires a function that is not yet ready for execution (i.e., not yet translated or compiled) 107. If the user action requires a function that is ready for execution, the function will execute normally 108. If the user action requires a function that is not yet ready for execution, the code execution thread 101 will attempt to find the requested functions in the translated code cache 109. When those functions are present 110, the thread will execute them at full speed and the user will perceive little or no delay. However, when those functions are absent, the code execution thread makes a blocking request 111 to the synchronous code translation thread 102 and waits until that thread reports that the function has been translated 112. In these cases, the user may perceive a brief "jitter" in program execution that has come to typify emulation / JIT compilation.

This shortcoming is addressed with the introduction of a second, asynchronous code translation thread 105 running on another processor or processor core 106, for example. As the synchronous translation thread 102 processes functions, it detects 113 the presence in the code of calls to other functions that are, as of yet, not required by the user. Upon identifying such a call, the synchronous translation thread 102 passes 114 the function entry point to the asynchronous translation thread 105. In the interests of unblocking the code execution thread 101, the synchronous thread 102 returns as quickly as possible 112 and continues on to execute the translated function previously stored in the code cache. The asynchronous thread 105, however, is free to continue translating 115 and then storing in the code cache 116 the discovered secondary functions in anticipation of future user needs. This collaboration increases the odds that the next function requested by the user will already have been translated. In an ideal environment, this approach permits the entire program to be translated well before the user exercises its more complex features, thereby reducing perceived "jitter" and increasing average performance.

This process is further optimized by logic running on the asynchronous thread 105 that can, on its own initiative, discover and process un-translated code in the program binary. As a practical matter, not all functions are discoverable by following branch trees; in particular, "virtual" functions cannot be found in this way. For example, one implementation includes logic that parses the binary itself and identify segments of the file that appear to be code functions. When such segments are found, they are immediately placed in the translation queue of the asynchronous translation thread 105. As a real-world demonstration of the power of this approach, more than 90% of a complex game such as Halo 2® can be located and compiled within the first minute of game play.

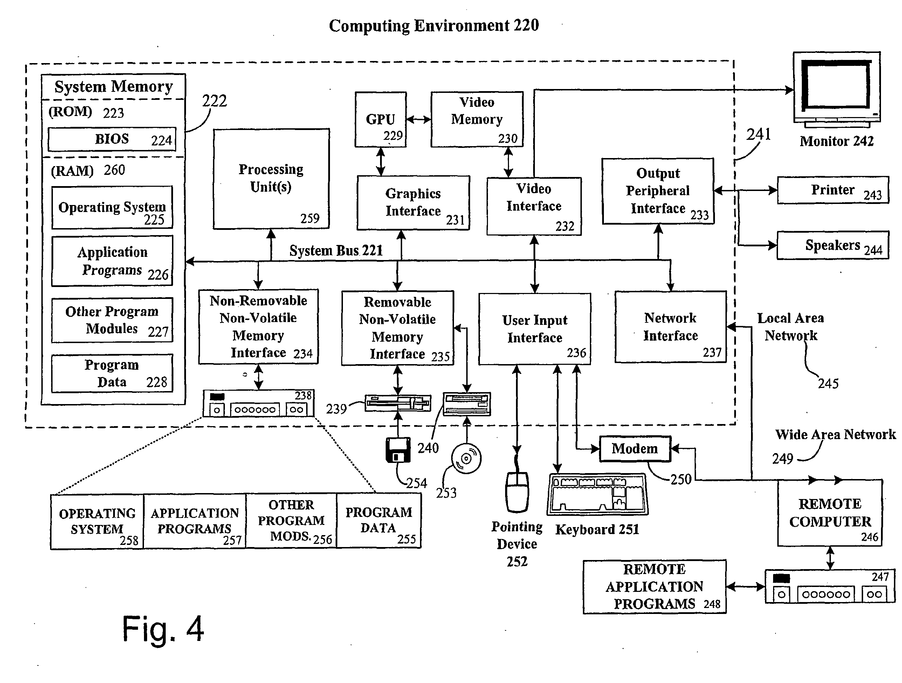

Referring next to Fig. 4, shown is a block diagram representing an exemplary computing device suitable for use in conjunction with implementing the processes described above. For example, the computer executable instructions that carry out the processes and methods for asynchronous JIT compilation may reside and/or be executed in such a computing environment as shown in Fig. 4. The computing system environment 220 is only one example of a suitable computing environment and is not intended to suggest any limitation as to the scope of use or functionality of the invention. Neither should the computing environment 220 be interpreted as having any dependency or requirement relating to any one or combination of components illustrated in the exemplary operating environment 220. For example a computer game console may also include those items such as those described below for use in conjunction with implementing the processes described above.

Aspects of the invention are operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

Aspects of the invention may be implemented in the general context of computer-executable instructions, such as program modules, being executed by a computer. Generally, program modules include routines, programs, objects, components, data structures, etc. that perform particular tasks or implement particular abstract data types. Aspects of the invention may also be practiced in distributed computing environments where tasks are performed by remote processing devices that are linked through a communications network. In a distributed computing environment, program modules may be located in both local and remote computer storage media including memory storage devices.

An exemplary system for implementing aspects of the invention includes a general purpose computing device in the form of a computer 241. Components of computer 241 may include, but are not limited to, a processing unit 259, a system memory 222, and a system bus 221 that couples various system components including the system memory to the processing unit 259. The system bus 221 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and, Peripheral Component Interconnect (PCI) bus also known as Mezzanine bus.

Computer 241 typically includes a variety of computer readable media. Computer readable media can be any available media that can be accessed by computer 241 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by computer 241. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer readable media.

The system memory 222 includes computer storage media in the form of volatile and/or nonvolatile memory such as read only memory (ROM) 223 and random access memory (RAM) 260. A basic input/output system 224 (BIOS), containing the basic routines that help to transfer information between elements within computer 241, such as during start-up, is typically stored in ROM 223. RAM 260 typically contains data and/or program modules that are immediately accessible to and/or presently being operated on by processing unit 259. By way of example, and not limitation, Fig. 4 illustrates operating system 225, application programs 226, other program modules 227, and program data 228.

The computer 241 may also include other removable/non-removable, volatile/nonvolatile computer storage media. By way of example only, Fig. 4 illustrates a hard disk drive 238 that reads from or writes to non-removable, nonvolatile magnetic media, a magnetic disk drive 239 that reads from or writes to a removable, nonvolatile magnetic disk 254, and an optical disk drive 240 that reads from or writes to a removable, nonvolatile optical disk 253 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 238 is typically connected to the system bus 221 through an non-removable memory interface such as interface 234, and magnetic disk drive 239 and optical disk drive 240 are typically connected to the system bus 221 by a removable memory interface, such as interface 235.

The drives and their associated computer storage media discussed above and illustrated in Fig. 4, provide storage of computer readable instructions, data structures, program modules and other data for the computer 241. In Fig. 4, for example, hard disk drive 238 is illustrated as storing operating system 258, application programs 257, other program modules 256, and program data 255. Note that these components can either be the same as or different from operating system 225, application programs 226, other program modules 227, and program data 228. Operating system 258, application programs 257, other program modules 256, and program data 255 are given different numbers here to illustrate that, at a minimum, they are different copies. A user may enter commands and information into the computer 241 through input devices such as a keyboard 251 and pointing device 252, commonly referred to as a mouse, trackball or touch pad. Other input devices (not shown) may include a microphone, joystick, game pad, satellite dish, scanner, or the like. These and other input devices are often connected to the processing unit 259 through a user input interface 236 that is coupled to the system bus, but may be connected by other interface and bus structures, such as a parallel port, game port or a universal serial bus (USB). A monitor 242 or other type of display device is also connected to the system bus 221 via an interface, such as a video interface 232. In addition to the monitor, computers may also include other peripheral output devices such as speakers 244 and printer 243, which may be connected through a output peripheral interface 233.

The computer 241 may operate in a networked environment using logical connections to one or more remote computers, such as a remote computer 246. The remote computer 246 may be a personal computer, a server, a router, a network PC, a peer device or other common network node, and typically includes many or all of the elements described above relative to the computer 241, although only a memory storage device 247 has been illustrated in Fig. 4. The logical connections depicted in Fig. 4 include a local area network (LAN) 245 and a wide area network (WAN) 249, but may also include other networks. Such networking environments are commonplace in offices, enterprise-wide computer networks, intranets and the Internet.

When used in a LAN networking environment, the computer 241 is connected to the LAN 245 through a network interface or adapter 237. When used in a WAN networking environment, the computer 241 typically includes a modem 250 or other means for establishing communications over the WAN 249, such as the Internet. The modem 250, which may be internal or external, may be connected to the system bus 221 via the user input interface 236, or other appropriate mechanism. In a networked environment, program modules depicted relative to the computer 241, or portions thereof, may be stored in the remote memory storage device. By way of example, and not limitation, Fig. 4 illustrates remote application programs 248 as residing on memory device 247. It will be appreciated that the network connections shown are exemplary and other means of establishing a communications link between the computers may be used.

It should be understood that the various techniques described herein may be implemented in connection with hardware or software or, where appropriate, with a combination of both. Thus, the methods and apparatus of the invention, or certain aspects or portions thereof, may take the form of program code (*i.e*., instructions) embodied in tangible media, such as floppy diskettes, CD-ROMs, hard drives, or any other machine-readable storage medium wherein, when the program code is loaded into and executed by a machine, such as a computer, the machine becomes an apparatus for practicing the invention. In the case of program code execution on programmable computers, the computing device generally includes a processor, a storage medium readable by the processor (including volatile and non-volatile memory and/or storage elements), at least one input device, and at least one output device. One or more programs that may implement or utilize the processes described in connection with the invention, e.g., through the use of an API, reusable controls, or the like. Such programs are preferably implemented in a high level procedural or object oriented programming language to communicate with a computer system. However, the program(s) can be implemented in assembly or machine language, if desired. In any case, the language may be a compiled or interpreted language, and combined with hardware implementations.

Although exemplary embodiments may refer to utilizing aspects of the invention in the context of one or more stand-alone computer systems, the invention is not so limited, but rather may be implemented in connection with any computing environment, such as a network or distributed computing environment. Still further, aspects of the invention may be implemented in or across a plurality of processing chips or devices, and storage may similarly be effected across a plurality of devices. Such devices might include personal computers, network servers, handheld devices, supercomputers, or computers integrated into other systems such as automobiles and airplanes.

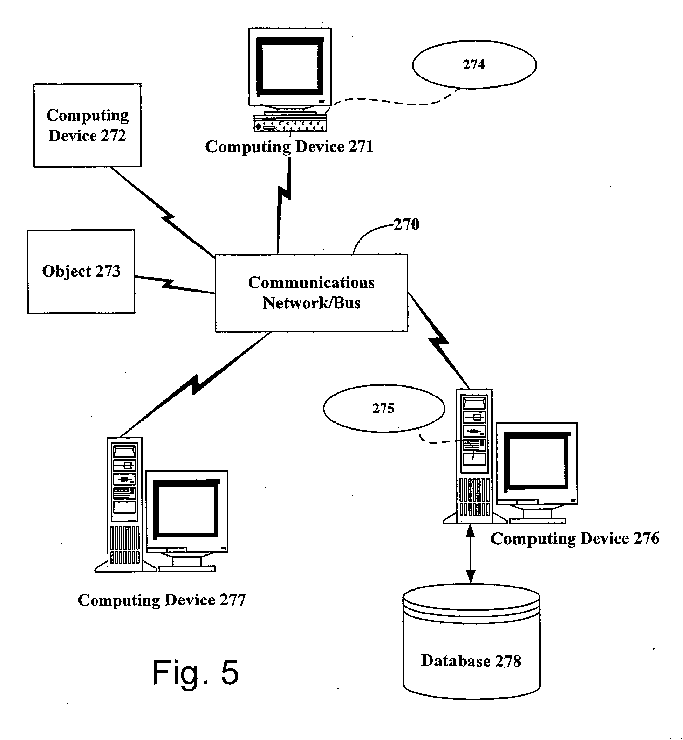

Referring next to Fig. 5, shown is an exemplary networked computing environment in which many computerized processes may be implemented to perform the processes described above. For example, parallel computing may be part of such a networked environment with various clients on the network of Fig. 5 using and/or implementing asynchronous JIT compilation. One of ordinary skill in the art can appreciate that networks can connect any computer or other client or server device, or in a distributed computing environment. In this regard, any computer system or environment having any number of processing, memory, or storage units, and any number of applications and processes occurring simultaneously is considered suitable for use in connection with the systems and methods provided.

Distributed computing provides sharing of computer resources and services by exchange between computing devices and systems. These resources and services include the exchange of information, cache storage and disk storage for files. Distributed computing takes advantage of network connectivity, allowing clients to leverage their collective power to benefit the entire enterprise. In this regard, a variety of devices may have applications, objects or resources that may implicate the processes described herein.

Fig. 5 provides a schematic diagram of an exemplary networked or distributed computing environment. The environment comprises computing devices 271, 272, 276, and 277 as well as objects 273, 274, and 275, and database 278. Each of these entities 271, 272, 273, 274, 275, 276, 277 and 278 may comprise or make use of programs, methods, data stores, programmable logic, etc. The entities 271, 272, 273, 274, 275, 276, 277 and 278 may span portions of the same or different devices such as PDAs, audio/video devices, MP3 players, personal computers, etc. Each entity 271, 272, 273, 274, 275, 276, 277 and 278 can communicate with another entity 271, 272, 273, 274, 275, 276, 277 and 278 by way of the communications network 270. In this regard, any entity may be responsible for the maintenance and updating of a database 278 or other storage element.

This network 270 may itself comprise other computing entities that provide services to the system of Fig. 5, and may itself represent multiple interconnected networks. In accordance with an aspect of the invention, each entity 271, 272, 273, 274, 275, 276, 277 and 278 may contain discrete functional program modules that might make use of an API, or other object, software, firmware and/or hardware, to request services of one or more of the other entities 271, 272, 273, 274, 275, 276, 277 and 278.

It can also be appreciated that an object, such as 275, may be hosted on another computing device 276. Thus, although the physical environment depicted may show the connected devices as computers, such illustration is merely exemplary and the physical environment may alternatively be depicted or described comprising various digital devices such as PDAs, televisions, MP3 players, etc., software objects such as interfaces, COM objects and the like.

There are a variety of systems, components, and network configurations that support distributed computing environments. For example, computing systems may be connected together by wired or wireless systems, by local networks or widely distributed networks. Currently, many networks are coupled to the Internet, which provides an infrastructure for widely distributed computing and encompasses many different networks. Any such infrastructures, whether coupled to the Internet or not, may be used in conjunction with the systems and methods provided.

A network infrastructure may enable a host of network topologies such as client/server, peer-to-peer, or hybrid architectures. The "client" is a member of a class or group that uses the services of another class or group to which it is not related. In computing, a client is a process, *i.e*., roughly a set of instructions or tasks, that requests a service provided by another program. The client process utilizes the requested service without having to "know" any working details about the other program or the service itself. In a client/server architecture, particularly a networked system, a client is usually a computer that accesses shared network resources provided by another computer, e.g., a server. In the example of Fig. 5, any entity 271, 272, 273, 274, 275, 276, 277 and 278 can be considered a client, a server, or both, depending on the circumstances.

A server is typically, though not necessarily, a remote computer system accessible over a remote or local network, such as the Internet. The client process may be active in a first computer system, and the server process may be active in a second computer system, communicating with one another over a communications medium, thus providing distributed functionality and allowing multiple clients to take advantage of the information-gathering capabilities of the server. Any software objects may be distributed across multiple computing devices or objects.

Client(s) and server(s) communicate with one another utilizing the functionality provided by protocol layer(s). For example, HyperText Transfer Protocol (HTTP) is a common protocol that is used in conjunction with the World Wide Web (WWW), or "the Web." Typically, a computer network address such as an Internet Protocol (IP) address or other reference such as a Universal Resource Locator (URL) can be used to identify the server or client computers to each other. The network address can be referred to as a URL address. Communication can be provided over a communications medium, e.g., client(s) and server(s) may be coupled to one another via TCP/IP connection(s) for high-capacity communication.

In light of the diverse computing environments that may be built according to the general framework provided in Fig. 5 and the further diversification that can occur in computing in a network environment such as that of Fig. 5, the systems and methods provided herein cannot be construed as limited in any way to a particular computing architecture. Instead, the invention should not be limited to any single embodiment, but rather should be construed in breadth and scope in accordance with the appended claims.

## Claims

1. A method for translating computer program code (103) by a synchronous code translation thread (102), the method comprising:
detecting during the synchronous code translation thread at least one computer program code module (117) that may be required for future execution of a computer program;
invoking an asynchronous code translation thread (105) by the synchronous code translation thread in order to run ahead of user execution and pre-translate the detected program code module; and
translating for execution the detected program code module by the asynchronous code translation thread while executing at least one other previously translated program code module of the computer program.

2. The method of claim 1 further comprising:
storing the translated detected program code module (117) for future execution should that program code module be required for execution of the computer program.

3. The method of claim 1 further comprising:
depositing into a translated code cache, by both the synchronous and asynchronous code translation threads, translated code for delivery to a code execution thread, wherein the a translated code cache has contention-management structures.

4. The method of claim 1 wherein the detecting comprises:
identifying segments of the computer program that appear to be code functions by parsing a binary tree corresponding to a branch tree representative of a possible execution of the computer program.

5. A computer readable medium having instructions thereon for performing the method of one of claims 1 to 4.

6. A system for translating computer program code (103) by a synchronous code translation thread (102), the system comprising:
means for detecting during the synchronous code translation thread at least one computer program code module (117) that may be required for future execution of a computer program;
means for invoking an asynchronous code translation thread (105) by the synchronous code translation thread in order to run ahead of user execution of the computer program and pre-translate the detected program code module for said pre-translation; and
means for translating for execution the detected program code module by the asynchronous code translation thread while executing at least one other previously translated program code module of the computer program.

7. The system of claim 6 further comprising:
means for storing the translated detected program code module (117) for future execution should that program code module be required for execution of the computer program.

8. The system of claim 6 further comprising:
means for depositing into a translated code cache, by both the synchronous and asynchronous code translation threads, translated code for delivery to a code execution thread, wherein the a translated code cache has contention-management structures.

## Patentansprüche

1. Verfahren zum Übersetzen von Computerprogramm-Code (103) mittels eines synchronen Codeübersetzungs-Thread (102), wobei das Verfahren umfasst:
Erfassen wenigstens eines Computerprogramm-Codemoduls (117), das für weitere Ausführung eines Computerprogramms erforderlich sein kann, während des synchronen Codeübersetzungs-Thread;
Aufrufen eines asynchronen Codeübersetzungs-Thread (105) durch den synchronen Codeübersetzungs-Thread, um Benutzerausführung zuvorzukommen und das erfasste Programmecode-Modul vorzuübersetzen; und
Übersetzen des erfassten Programmcode-Moduls zur Ausführung durch den asynchronen Codeübersetzungs-Thread bei gleichzeitigem Ausführen wenigstens eines anderen bereits übersetzten Programmcode-Moduls des Computerprogramms.

2. Verfahren nach Anspruch 1, das des Weiteren umfasst:
Speichern des übersetzten erfassten Programmcode-Moduls (117) zur zukünftigen Ausführung, falls dieses Programmcode-Modul zur Ausführung des Computerprogramms erforderlich sein sollte.

3. Verfahren nach Anspruch 1, das des Weiteren umfasst:
Deponieren von übersetztem Code in einem Cache für übersetzten Code sowohl durch den synchronen als auch den asynchronen Codeübersetzungs-Thread zur Übergabe an einen Codeausführungs-Thread, wobei der Cache für übersetzten Code Inhaltverwaltungs-Strukturen aufweist.

4. Verfahren nach Anspruch 1, wobei das Erfassen umfasst:
Identifizieren von Segmenten des Computerprogramms, die Codefunktionen zu sein scheinen, durch Parsen eines Binärbaums, der einem Verzweigungsbaum entspricht, der repräsentativ für eine mögliche Ausführung des Computerprogramms ist.

5. Computerlesbares Medium, auf dem sich Befehle zum Durchführen des Verfahrens nach einem der Ansprüche 1 bis 4 befinden.

6. System zum Übersetzen von Computerprogramm-Code (103) mittels eines synchronen Codeübersetzungs-Thread (102), wobei das System umfasst:
eine Einrichtung zum Erfassen wenigstens eines Computerprogramm-Codemoduls (117), das für zukünftige Ausführung eines Computerprogramms erforderlich sein kann, während des synchronen Codeübersetzungs-Thread;
eine Einrichtung zum Aufrufen eines asynchronen Codeübersetzungs-Thread (105) durch den synchronen Codeübersetzungs-Thread, um Benutzerausführung des Computerprogramms zuvorzukommen und das erfasste Programmecode-Modul für die Vorübersetzung vorzuübersetzen; und
eine Einrichtung zum Übersetzen des erfassten Programmcode-Moduls durch den asynchronen Codeübersetzungs-Thread zur Ausführung bei gleichzeitigem Ausführen wenigstens eines anderen bereits übersetzten Programmcode-Moduls des Computerprogramms.

7. System nach Anspruch 6, das des Weiteren umfasst:
eine Einrichtung zum Speichern des übersetzten erfassten Programmcode-Moduls (117) zur zukünftigen Ausführung, falls dieses Programmcode-Modul zur Ausführung des Computerprogramms erforderlich sein sollte.

8. System nach Anspruch 6, das des Weiteren umfasst:
eine Einrichtung zum Deponieren von übersetztem Code in einem Cache für übersetzten Code sowohl durch den synchronen als auch den asynchronen Codeübersetzungs-Thread zur Übergabe an einen Codeausführungs-Thread, wobei der Cache für übersetzten Code Inhaltverwaltungs-Strukturen aufweist.

## Revendications

1. Procédé permettant de traduire un code (103) de programme informatique grâce à un processus (102) synchrone de traduction de code, le procédé comprenant :
la détection, pendant le processus synchrone de traduction de code, d'au moins un module (117) de code de programme informatique qui peut être requis en vue de l'exécution ultérieure d'un programme informatique,
l'appel, par le processus synchrone de traduction de code, d'un processus (105) asynchrone de traduction de code afin qu'il se déroule avant exécution par un utilisateur et traduise à l'avance le module détecté de code de programme, et
la traduction, par le processus asynchrone de traduction de code, en vue d'une exécution du module de code de programme détecté tout en exécutant au moins un autre module de code de programme précédemment traduit du programme informatique.

2. Procédé selon la revendication 1, comprenant en outre :
la mémorisation du module (117) de code de programme détecté traduit en vue d'une exécution ultérieure dans la mesure où ce module de code de programme est requis pour l'exécution du programme informatique.

3. Procédé selon la revendication 1, comprenant en outre :
le placement dans une mémoire cache de code traduit, à la fois par les processus synchrone et asynchrone de traduction de code, du code traduit en vue de sa livraison à un processus d'exécution de code, dans lequel la mémoire cache de code traduit comporte des structures de gestion de collision.

4. Procédé selon la revendication 1, dans lequel la détection comprend :
l'identification de segments du programme informatique qui apparaissent être des fonctions de code en analysant un arbre binaire correspondant à une arborescence à branches qui représente une exécution possible du programme informatique.

5. Support pouvant être lu par un ordinateur comportant des instructions permettant d'exécuter le procédé conforme à l'une des revendications 1 à 4.

6. Système permettant de traduire un code (103) de programme informatique grâce à un processus (102) synchrone de traduction de code, le système comprenant :
un moyen permettant de détecter, pendant le processus synchrone de traduction de code, d'au moins un module (117) de code de programme informatique qui peut être requis en vue de l'exécution ultérieure d'un programme informatique,
un moyen permettant d'appeler un processus (105) asynchrone de traduction de code par le processus synchrone de traduction de code afin qu'il se déroule avant exécution par un utilisateur et traduise à l'avance le module détecté de code de programme pour ladite traduction à l'avance, et
un moyen permettant de traduire en vue de son exécution le module de code de programme détecté par le processus asynchrone de traduction de code tout en exécutant au moins un autre module de code de programme précédemment traduit du programme informatique.

7. Système selon la revendication 6, comprenant en outre :
un moyen permettant de mémoriser le module (117) de code de programme détecté traduit en vue d'une exécution ultérieure dans la mesure où ce module de code de programme est requis pour l'exécution du programme informatique.

8. Système selon la revendication 6, comprenant en outre :
un moyen permettant de déposer dans une mémoire cache de code traduit, à la fois par les processus synchrone et asynchrone de traduction de code, du code traduit en vue de sa livraison à un processus d'exécution de code, dans lequel la mémoire cache de code traduit comporte des structures de gestion de collision.
